(19) Europäisches Patentamt
European Patent Office
Office européen des brevets

(11) **EP 4 624 278 A1**

(12) **EUROPEAN PATENT APPLICATION**
published in accordance with Art. 153(4) EPC

(43) Date of publication:
**01.10.2025 Bulletin 2025/40**

(21) Application number: **23893475.6**

(22) Date of filing: **13.10.2023**

(51) International Patent Classification (IPC):
**B60R 21/272** (2006.01)

(52) Cooperative Patent Classification (CPC):
**B60R 21/272**

(86) International application number:
**PCT/CN2023/124519**

(87) International publication number:
**WO 2024/109383 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2022 CN 202211488718**

(71) Applicant: **Yanfeng International Automotive
Technology Co., Ltd.
Shanghai 201306 (CN)**

(72) Inventors:
• **QI, Jiayang
Shanghai 201306 (CN)**
• **REN, Xinglun
Shanghai 201306 (CN)**
• **SUN, Zhujun
Shanghai 201306 (CN)**

(74) Representative: **Botti & Ferrari S.p.A.
Via Cappellini, 11
20124 Milano (IT)**

(54) **GUNPOWDER CHAMBER, HYBRID GAS GENERATOR, AND AIRBAG**

(57)    The present application relates to a pyrotechnic charge chamber for a hybrid gas generator, which comprises a tube (60), as well as a first partition element (1) and a second partition element (2). The first partition element has a through hole (5), which constitutes an ignition channel for an ignition system (10). A first chamber (6) for containing a pyrotechnic charge (4) is formed between the two partition elements. The second partition element has a peripheral portion (11), and a central portion (12) connected to the peripheral portion and extending towards the first partition element in an at least partially-tapered manner in an axial direction of the tube. The central portion has a wall body around the longitudinal axis of the tube, and the wall body surrounds and defines a second chamber (7), and is provided with a plurality of discharging holes (13), which discharging holes are configured such that the reaction gas is mixed with the compression gas stored in the tube through the discharging holes. The present application also relates to a hybrid gas generator and a safety airbag.

Fig. 2

## Description

### TECHNICAL FIELD

The present application relates to a pyrotechnic charge chamber for a hybrid gas generator, a hybrid gas generator, and a safety airbag.

### BACKGROUND ART

Safety airbags are widely used as safety protection devices for occupants in transportation means, especially in land transportation means, in particular in motor vehicles. A safety airbag may comprise a folded cushion and a gas generator. In a predetermined operation condition of a transportation means, for example, in a collision event of a motor vehicle, a gas generator can be activated to generate gas rapidly, wherein the generated gas is filled into a cushion to inflate and pop up the folded cushion, wherein an occupant is buffered, wherein the head or other body parts of the occupant is prevented from colliding with a hard or sharp object. The gas generator may also be referred to as an inflator. The safety airbag may be, for example, a driver's safety airbag mounted in a steering wheel, a co-driver's safety airbag mounted in an instrument panel, a curtain-type safety airbag or the like.

In the vehicle technology, an inflatable restraint system, such as a safety airbag, is developed as a supplement to a conventional safety belt restraint system. Typically, when a safety airbag is activated, an occupant in a vehicle can be protected in a way that the inflated cushion with elasticity absorbs the physical impact caused by collision of the vehicle, wherein in the collision event, the cushion is inflated and enters a space between the occupant and an internal object or an internal surface of the vehicle, wherein the inflated cushion buffers the occupant, thereby reducing the possibility of injury to the occupant due to the unexpected contact of the occupant with the internal object or the internal surface of the vehicle.

A safety airbag may be a part of a safety protection system comprising a plurality of structural assemblies in a vehicle. Typically, these structural assemblies may relate to a cushion, a gas generator, a sensor and an electronic control unit. The sensor can acquire data related to an emergency state of the vehicle. The electronic control unit can process the data, and thus can determine whether a collision is about to occur or is occurring. With a trigger signal being input to the gas generator, the gas generator can be powered on and activated and thus can supply or generate gas.

A compression gas generator is known in practice, which may also be referred to as a hybrid gas generator. Such a gas generator includes a pressure container, in which a pressure chamber for containing the compression gas is defined. When an ignition tube of the gas generator is activated, the ignition tube can ignite a pyrotechnic charge in a pyrotechnic charge chamber to generate a high-temperature and high-pressure gas instantaneously, which is mixed with the relatively cold compression gas to enhance the temperature and pressure of the compression gas, wherein the mixed gas is fed from the gas generator to the cushion through a diffuser.

The inventors of the present application found in the research and development of products, that the hybrid gas generator in the prior art may be defective in the following aspects: abnormal sound may be generated due to shaking of the pyrotechnic charge when the vehicle is running; the ignition energy of the ignition system may be undesirably transferred to the pyrotechnic charge in the pyrotechnic charge chamber; in an assembling process of the gas generator, sparks or heat generated by welding may accidentally ignite the pyrotechnic charge, and thus lead to a potential safety risk in the manufacturing process; the output performance of the mixed gas of the reaction gas with the compression gas can be improved.

### SUMMARY OF INVENTION

An object of the present application is to provide a pyrotechnic charge chamber for a hybrid gas generator, which can at least partially eliminate at least one of the above-mentioned disadvantages. Another object of the present application is to provide a hybrid gas generator and a safety airbag.

A first aspect of the invention relates to a pyrotechnic charge chamber for a hybrid gas generator, wherein the pyrotechnic charge chamber comprises a tube, and a first partition element and a second partition element disposed oppositely in the tube, wherein the first partition element has a through hole which constitutes an ignition channel for an ignition system, wherein a first chamber for containing a pyrotechnic charge is formed between the first and the second partition element in the tube, wherein the pyrotechnic charge is configured to generate a reaction gas in the first chamber when ignited by the ignition system, wherein the second partition element has a peripheral portion abutted against an inner wall of the tube, and a central portion connected with the peripheral portion and extending towards the first partition element in an at least partially-tapered manner in an axial direction of the tube, wherein the central portion has a wall body around a longitudinal axis of the tube, wherein the wall body surrounds and defines a second chamber and has a plurality of discharging holes, wherein the discharging holes are configured such that the reaction gas is mixed through the discharging holes with the compression gas stored in the tube.

In some embodiments, the peripheral portion of the second partition element may be configured in a cylindrical shape.

In some embodiments, the peripheral portion of the second partition element may not extend straightly in a longitudinal section. For example, it may have a circular arc shape or a wave shape in the longitudinal section.

In some embodiments, the peripheral portion of the second partition element may have a first axial end side facing the first partition element, and a second axial end side opposite to the first axial end side.

In some embodiments, with reference to a longitudinal axis of the tube, the central portion of the second partition element may be connected with the peripheral portion at an axial position spaced apart from the first axial end side of the peripheral portion.

In some embodiments, with reference to the longitudinal axis of the tube, the central portion of the second partition element may be connected with the peripheral portion at an axial position centrally between the first and the second axial end side of the peripheral portion.

In some embodiments, with reference to the longitudinal axis of the tube, the central portion of the second partition element may be connected with the peripheral portion at an axial position of the second axial end side.

In some embodiments, the central portion of the second partition element may be connected directly with the second axial end side of the peripheral portion, or the central portion of the second partition element may be connected with the second axial end side of the peripheral portion through an annular bottom. Preferably, the annular bottom may be holeless. Preferably, the annular bottom may extend in a radial plane perpendicular to the longitudinal axis of the tube.

In some embodiments, the second partition element may be integrally produced, in particular made from a sheet metal.

In some embodiments, the second partition element may be constructed in multiple pieces, for example, in two pieces.

In some embodiments, the central portion may include a first section facing the first partition element and having no discharging hole, and a second section adjacent to the first section and having the discharging holes.

In some embodiments, the central portion may have a closed top portion, or a top portion with a central opening.

In some embodiments, a projection of the through hole can fall within a projection of the first section, along the longitudinal axis of the tube in a radial plane perpendicular to the longitudinal axis.

In some embodiments, a ratio "a" of a diameter of the circular projection of the first section to a diameter of the circular projection of the through hole can satisfy the formula: $1 \leq a \leq 1.1$.

In some embodiments, a ratio "a1" of an area of the projection (especially a circular projection) of the first section to an area of the projection (especially a circular projection) of the through hole can satisfy the formula: $1 \leq a1 \leq 1.21$.

In some embodiments, the central portion may have a central opening at its top portion, and the central portion includes a first section facing the first partition element and having at least one first discharging hole, and a second section adjacent to the first section and having at least one second discharging hole.

In some embodiments, the first discharging hole may be provided with a gas guide configured to guide a portion of a central gas flow, which central gas flow enters the second chamber through the central opening, through the first discharging hole into an annular region of the first chamber between the wall body of the central portion and the inner wall of the tube. The second discharging hole is configured to guide the reaction gas in the annular region into the second chamber.

In some embodiments, the first section may have a plurality of first discharging holes distributed in a circumferential direction, and/or the second section may have a plurality of second discharging holes distributed in a circumferential direction.

In some embodiments, the first discharging holes and the second discharging holes may be offset to each other in the circumferential direction.

In some embodiments, the first discharging holes and the second discharging holes may have the same or different numbers and/or shapes and/or sizes and/or layouts.

In some embodiments, the plurality of discharging holes may have the same or different shapes and/or sizes and/or layouts.

In some embodiments, the gas guide may be formed by a material cutout punched out from the wall body of the central portion, and the first discharging hole may be formed by punching out the gas guide from the wall body of the central portion.

In some embodiments, the plurality of discharging holes may include at least one circular hole and/or at least one elongated hole and/or at least one square hole and/or at least one triangular hole and/or at least one hole with other suitable shapes.

In some embodiments, the first discharging hole may be an elongated hole, and the gas guide may be a tongue extending in the second chamber and configured to guide the portion of the central gas flow towards the first discharging hole.

In some embodiments, the second discharging hole may be an elongated hole.

In some embodiments, the elongated hole may extend in an axial plane containing the longitudinal axis of the tube.

In some embodiments, the elongated holes may extend straightly or in a curved line.

In some embodiments, the central portion may include a linearly-tapered section and/or an incrementally-tapered section and/or a decrementally-tapered section.

In some embodiments, the central portion may exclusively include a tapered section.

In some embodiments, in addition to a tapered section, the central portion may include a cylindrical section.

In some embodiments, the central portion may be configured in a conical or hemispherical shape.

In some embodiments, the central portion in a conical shape may extend beyond the peripheral portion towards the first partition element in an axial direction of the tube.

In some embodiments, the central portion in a hemispherical shape may not extend beyond the peripheral portion towards the first partition element in an axial direction of the tube.

In some embodiments, the second partition element may be configured as a revolving body.

In some embodiments, the second partition element may be press-fitted into the tube.

In some embodiments, a pretensioning force for press-fitting the second partition element into the tube may be configured such that the second partition element can slide in the tube to a predetermined limited extent when the hybrid gas generator is activated.

In some embodiments, the peripheral portion may have a length L along the longitudinal axis of the tube, which length L satisfies the following formula:

$$0.25 \times \pi \times Di \times L \times Pmax > \Delta P \times \pi \times (Di^2/4 - Qh \times Dh^2/4),$$

where Di is an inner diameter of the tube, Pmax is a maximum internal pressure in the tube when the hybrid gas generator is activated, $\Delta P$ is a pressure difference between the maximum internal pressure and a pressure of the compression gas, Dh is a diameter of the discharging holes, and Qh is the number of the discharging holes in the second section.

When a discharging hole is a non-circular hole, an equivalent diameter may be adopted, wherein an area calculated by means of the equivalent diameter is equal to an area of the non-circular hole. In the relational expression of the present application, a total area of the discharging holes is involved, wherein it is assumed that the discharging holes are the same-size circular holes. When the discharging holes have different shapes, the total area of the discharging holes may be a sum of the areas of the individual discharging holes, instead of a product of an area of a single discharging hole and the number of the discharging holes.

In some embodiments, the length L can also satisfy the following formula:

$$0.25 \times \pi \times Di \times L \times Pmax < 1.1 \times \Delta P \times \pi \times (Di^2/4 - Qh \times Dh^2/4).$$

In some embodiments, the first partition element may be configured in a cylindrical shape, wherein a peripheral surface of the first partition element may be abutted against the inner wall of the tube, wherein the through hole is configured to receive a closed protrusion of the ignition system, which protrusion is openable when the ignition system is activated. Preferably, a depth, with which the protrusion extends into the through hole, is less than or equal to an axial thickness of the first partition element. Preferably, the first partition element is press-fitted into the tube.

In some embodiments, the first partition element may be a plastic part, for example, it may be made of thermoplastic or thermosetting plastic, for example, glass fiber- or carbon fiber-reinforced plastic, such as polyurethane. The first partition element may be made of heat-insulating and/or flame-retardant plastic.

In some embodiments, the second partition element may be a metal part, for example, a sheet metal formed part. Preferably, the second partition element may be made of spring steel.

A second aspect of the present application relates to a hybrid gas generator. The hybrid gas generator comprises a tube defining a pressure chamber for containing compression gas, wherein an ignition system and a pyrotechnic charge chamber are mounted at a first axial end of the tube, wherein with reference to a longitudinal axis of the tube, the pyrotechnic charge chamber is adjacent to the ignition system at one side and adjacent to the pressure chamber for containing the compression gas at the other side, wherein the pyrotechnic charge chamber is the one according to any embodiment of the present application.

In some embodiments, the tube may be provided, at a second axial end opposite to the first axial end, with a throat sealed by a rupture membrane. Preferably, a ratio "b" of a total area of the plurality of discharging holes to an area of the throat satisfies the formula: b > 1.1, preferably 1.2 < b < 1.4.

A third aspect of the present application relates to a safety airbag, which comprises a cushion and a hybrid gas generator according to any embodiment of the present application in fluid connection with the cushion.

A fourth aspect of the present application relates to a transportation means, in particular a motor vehicle, such as a passenger vehicle or a truck, which comprises the safety airbag according to the third aspect of the present application. The transportation means may generally include land transportation means, marine transportation means and/or airborne transportation means.

Technical features mentioned above, technical features to be mentioned below and technical features separately shown in the drawings can be arbitrarily combined with each other, only if the combined technical features are not contradictory. All the feasible combinations of the features belong to the technical contents clearly recited in the present application. Any of the multiple sub-features contained in a single sentence can be applied independently, and need not to be applied together with other sub-features.

**BRIEF DESCRIPTION OF DRAWINGS**

The present application is described in more detail by means of exemplary embodiments with reference to the attached drawings. The figures are briefly described as follows:

Fig. 1 is a longitudinal sectional view of a hybrid gas generator according to a first embodiment of the present application.
Fig. 2 is a partially enlarged view of Fig. 1.
Figs. 3A and 3B are a perspective view and a longitudinal sectional view of a first partition element of a pyrotechnic charge chamber.
Figs. 4A and 4B are a perspective view and a longitudinal sectional view of a second partition element of the pyrotechnic charge chamber shown in Figs. 1 and 2 according to the first embodiment.
Figs. 5A and 5B are a perspective view and a longitudinal sectional view of a second partition element according to a second embodiment.
Figs. 6A and 6B are a perspective view and a longitudinal sectional view of a second partition element according to a third embodiment.
Fig. 7 shows pressure-time curves of a hybrid gas generator in the prior art and a hybrid gas generator according to the present application.

**EMBODIMENTS**

In the drawings, the same reference signs indicate the same components or components with the same functions. For a component which is shown in any drawing but not described in detail in the explanation for that drawing, reference can be made to the explanation for other drawings related to said component.

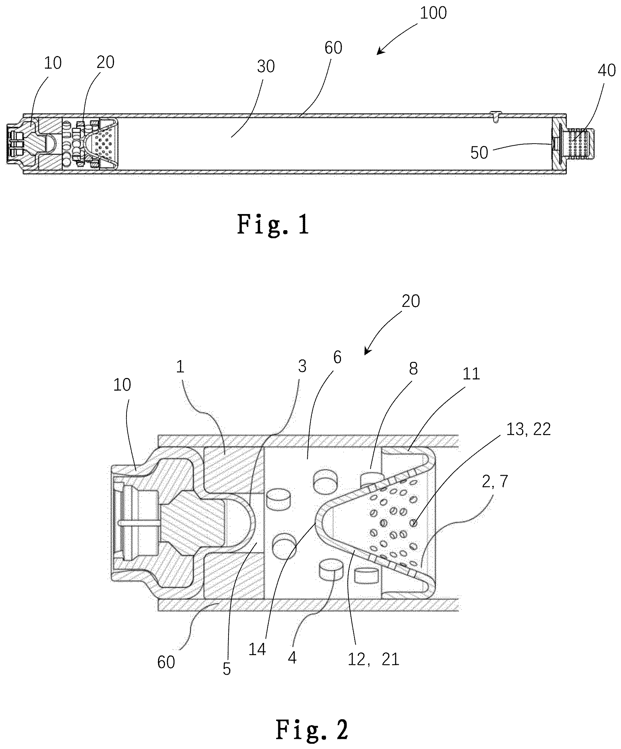

Fig. 1 is a schematic longitudinal sectional view of a hybrid gas generator 100 according to a first embodiment of the present application. The hybrid gas generator 100 has a tube 60. The tube has a longitudinal axis and defines a pressure chamber 30 for containing compression gas. The compression gas may be an inert gas. An ignition system 10 and a pyrotechnic charge chamber 20 are mounted at a first axial end of the tube 60. With reference to the longitudinal axis of the tube, the pyrotechnic charge chamber 20 is adjacent to the ignition system 10 at one side and adjacent to the pressure chamber 30 at the other side. The tube 60 is provided with a diffuser 40 at a second axial end opposite to the first axial end, wherein the diffuser 40 has a throat as a gas inlet, which throat may be sealed by a rupture membrane 50. The hybrid gas generator 100 may be in fluid connection with a folded cushion (not shown) via the diffuser 40 as an interface, so that a safety airbag is formed.

As a structural unit, the ignition system 10 may include an ignition tube or a detonator. When the ignition system 10 is powered on, chemical reaction may occur to the reactive substances contained in the ignition system 10 rapidly to generate a shock wave, so that a top end of the closed protrusion 3 of the ignition system 10 is opened, and thus the ignition energy is transmitted to a pyrotechnic charge chamber, and in turn a pyrotechnic charge 4 in the pyrotechnic charge chamber is ignited. By ignition of the pyrotechnic charge 4, a reaction gas can be generated. The pyrotechnic charge 4 may be in the form of block, sheet, ball or any other suitable form. Due to the fact that the reaction gas from the pyrotechnic charge chamber 20 and the compression gas stored in the pressure chamber 30 are mixed, the temperature and the pressure of the compression gas is raised, and the mixed gas is then output to the cushion via the diffuser 40 through the broken rupture membrane 50.

Fig. 2 is a partially enlarged view of Fig. 1. The pyrotechnic charge chamber 20 according to the first embodiment and the ignition system 10 in association with the pyrotechnic charge chamber can be more clearly observed in Fig.2. The pyrotechnic charge chamber 20 comprises the tube 60 (more precisely, an axial section of the tube 60), and a first partition element 1 and a second partition element 2, which are arranged oppositely in the tube 60.

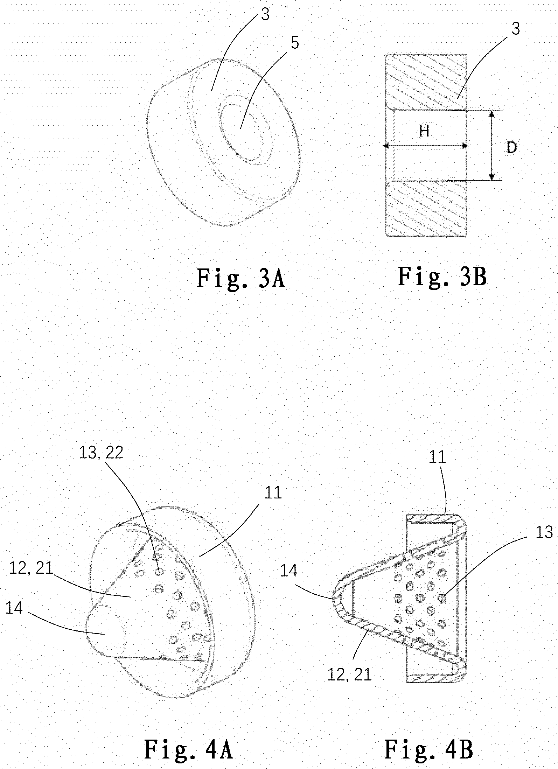

As shown in Figs. 2, 3A and 3B, the first partition element 1 may be constructed as a flat cylinder with an axial thickness H. The first partition element 1 may be made of heat-insulating and flame-retardant plastic, such as polyurethane. A peripheral surface of the first partition element 1 is abutted against an inner wall of the tube 60. The first partition element 1 may be tightly abutted against the inner wall of the tube 60 with its peripheral surface, , for example by press-fitting. The first partition element 1 has a central through hole 5, which constitutes an ignition channel for the ignition system 10. A protrusion 3 of the ignition system 10 extends into the through hole 5. A depth, with which the protrusion 3 extends into the through hole 5, may be less than or equal to an axial thickness H of the first partition element 1. The first partition element 1 separates the ignition system 10 from the pyrotechnic charge 4, but the first partition element 1 does not prevent the ignition system 10 from transmitting a shock wave to the pyrotechnic charge 4 through the through hole 5 when the ignition system 10 is activated.

The through hole 5 may have a shape adapted to the protrusion 3. Typically, the through hole 5 may be a circular cylindrical through hole with a diameter D. Advantageously, the first partition element 1 may be press-fitted with the protrusion 3 of the ignition system 10, and further advantageously, in order to facilitate the press-fitting of the first partition element 1 with the ignition system 10, a chamfer may be provided on a side of the through hole 5 facing the ignition system 10. In an exemplary assembling process, at first, the first partition element 1 may be press-fitted with the ignition system 10 in such a manner that the ignition system 10 is abutted against an end surface of the first partition element 1 and the protrusion 3 extends into the through hole 5. The protrusion 3 of the ignition system 10 has a hemispherical top portion and a cylindrical portion adjacent to the top portion, wherein the hemispherical top portion may have a diameter substantially equal to the diameter D of the through hole 5.

A length of the protrusion 3 in an axial direction may be less than or equal to an axial thickness H of the first partition element 1, so that the protrusion 3 may not be abutted against the pyrotechnic charge 4 in the pyrotechnic charge chamber 20. After the ignition system 10 is press-fitted with the first partition element 1, the ignition system 10 together with the first partition element 1, as a unit, may be pushed, for example, press-fitted, into the tube 60. Then, the ignition system 10 may be hermetically fixed to the inner wall of the tube 60 by welding.

In an exemplary embodiment, the first partition element 1 may have at least one of the following advantages:

1) The through hole 5 of the first partition element 1 can provide a reliable ignition channel for the ignition system 10, so as to improve the operation reliability of the ignition system 10 when it ignites the pyrotechnic charge 4.

2) Upon welding of the ignition system 10 with the tube 60, the first partition element 1 can prevent the heat or sparks generated by welding from accidentally igniting the pyrotechnic charge 4, and thus a potential safety risk in the manufacturing process of the hybrid gas generator 100 is eliminated.

3) The first partition element 1 prevents the pyrotechnic charge 4 from entering the ignition system 10, wherein such entering may cause instability of the operation performance of the hybrid generator 100.

4) The protrusion 3 of the ignition system 10 is not directly abutted against the pyrotechnic charge 4, which can prevent the pyrotechnic charge 4 from being "crushed into an inactive state", thus facilitating ignition of the pyrotechnic charge 4.

5) The first partition element 1 and the second partition element 2 cooperate to tightly hold the pyrotechnic charge 4 in the pyrotechnic charge chamber 20, which ensures that the pyrotechnic charge has a predetermined filling density, that a noise due to shaking of the pyrotechnic charge is avoided, and that a stable pressure can be established when the hybrid gas generator 100 is activated.

Figs. 4A and 4B are a perspective view and a longitudinal sectional view of the second partition element 2 according to the first embodiment of the present application. The second partition element 2 can be applied to the hybrid gas generator 100 as shown in Figs. 1 and 2. The second partition element 2 may be integrally formed from a sheet metal by punching. The second partition element 2 separates the pyrotechnic charge 4 from the pressure chamber 30 of the hybrid gas generator 100 that contains the compression gas. The second partition element 2 may be a revolving body. The second partition element 2 has a peripheral portion 11 abutted against the inner wall of the tube 60, and a central portion 12 connected with the peripheral portion 11 and extending towards the first partition element 1 in a linearly tapered manner in an axial direction of the tube 60.

In the first embodiment of the second partition element 2, the peripheral portion 11 may also be referred to as a crimped edge or a back-folded section. The peripheral portion 11 may be configured in a cylindrical shape, and has a first axial end side facing the first partition element 1 and a second axial end side opposite to the first axial end side.

The central portion 12 is in a conical shape. The central portion 12 may extend beyond the peripheral portion 11 towards the first partition element 1 in the axial direction of the tube 60. The central portion 12 has a wall body around the longitudinal axis of the tube, wherein the wall body surrounds and defines a second chamber 7, which is separated by the second partition element 2 from the first chamber 6 for containing the pyrotechnic charge 4. The wall body is provided with a plurality of circular discharging holes 13, which are formed in a plurality of successive rows in the longitudinal direction. The central portion 12 is connected directly with the second axial end side of the peripheral portion 11. The central portion 12 has a first section 21 facing the first partition element 1 and having no discharging hole, and a second section 22 adjacent to the first section 21 and provided with the discharging holes 13. A top portion 14 of the central portion 12 is closed.

Advantageously, a projection of the through hole 5 of the first partition element 1 can fall within a projection of the first section 21, along the longitudinal axis of the tube in a radial plane perpendicular to longitudinal axis. Advantageously, a ratio "a" of a diameter of the circular projection of the first section 21 to a diameter of the circular projection of the through hole 5 can satisfy the formula: $1 \leq a \leq 1.1$. In this instance, when the pyrotechnic charge 4 is ignited by the ignition system 10, the high-temperature and high-pressure reaction gas may not directly enter the downstream pressure chamber 30 through the first section 21 of the central portion 12. The reaction gas in the second section of the second partition element 2 in the form of a turbulent flow enters the downstream pressure chamber 30 through the discharging holes 13 provided exclusively in the second section. The reaction gas from the pyrotechnic charge chamber 20 can be mixed particularly well and quickly with the compression gas stored in the pressure chamber 30. The temperature and the pressure of the compression gas can be quickly raised. Advantageously, the ratio "b" of a total area of the discharging holes 13 to an area of the throat sealed by the rupture membrane 50 can satisfy the formula: b > 1, for example, b > 1.1. Preferably, the ratio "b" satisfies the formula b<2, for example b<1.5. Particularly preferably, the ratio "b" satisfies the formula 1.2<b<1.4, for example, "b" is about 1.3. Thus, when the hybrid gas generator 100 is activated, a particularly stable pressure can be established.

The second partition element 2 may be press-fitted into the tube 60. Advantageously, a pretensioning force for press-fitting the second partition element 2 into the tube 60 may be configured such that the second partition element 2 can slide in the tube 60 in a predetermined limited manner when the hybrid gas generator 100 is activated. The peripheral portion 11 has a length L along the longitudinal axis of the tube, which length L can satisfy the following formula:

$$0.25 \times \pi \times Di \times L \times Pmax > \Delta P \times \pi \times (Di^2/4 - Qh \times Dh^2/4),$$

where Di is an inner diameter of the tube, Pmax is a maximum internal pressure existing in the tube when the hybrid gas generator is in operation, $\Delta P$ is a pressure difference between the maximum internal pressure and a pressure of the compression gas, Dh is a diameter of the discharging holes, and Qh is the number of the discharging holes in the second section.

Further advantageously, the length L can further satisfy the following formula:

$$0.25 \times \pi \times Di \times L \times Pmax < 1.1 \times \Delta P \times \pi \times (Di^2/4 - Qh \times Dh^2/4).$$

By such design of the length L of the peripheral portion 11, the peripheral portion 11 can slide on the inner wall of the tube 60 in a particularly wellcontrolled manner when the hybrid gas generator 100 is activated, wherein an appropriate selection of the length L cooperates with the working deformation of the second partition element 2 generated when the hybrid gas generator 100 is activated, especially when the second partition element 2 is integrally formed from a sheet metal of spring steel.

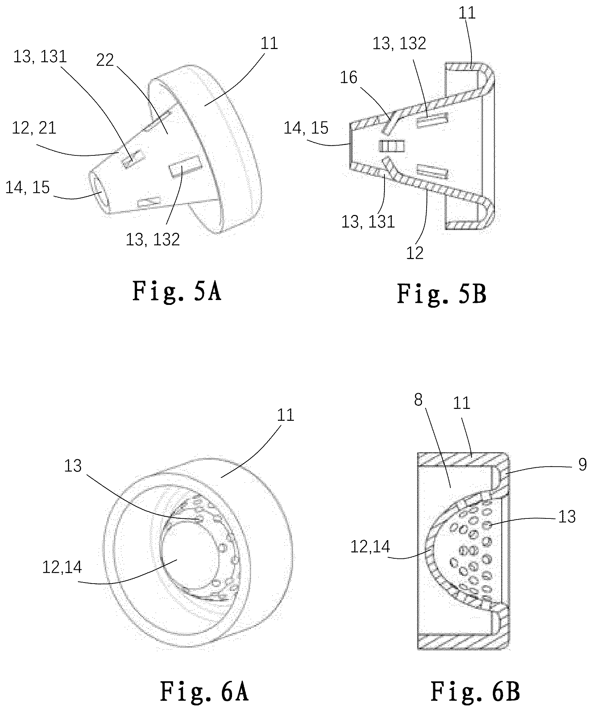

Figs. 5A and 5B are a perspective view and a longitudinal sectional view of a second partition element 2 according to a second embodiment of the present application. The second partition element 2 according to the second embodiment can be used in place of the second partition element according to the first embodiment as shown in Figs. 1 and 2. The modified hybrid gas generator 100 may be a hybrid gas generator according to a second embodiment of the present application, wherein the other components of the modified hybrid gas generator 100 may be the same as or similar to those of the hybrid gas generator according to the first embodiment as shown in Figs. 1 and 2, except for the second partition element 2.

As shown in Figs. 5A and 5B, the difference between the second partition element 2 according to the second embodiment and the second partition element according to the first embodiment may mainly lie in the arrangement of the opening in the central portion 12. The difference between the two embodiments is mainly explained below. In other aspects, reference can be made to the explanation of the second partition element according to the first embodiment.

The central portion 12 has a central opening 15 at its top portion 14. The discharging holes 13 of the central portion 12 include not only first discharging holes 131, but also second discharging holes 132. The central portion 11 includes a first section 21 facing the first partition element 1 and provided with a plurality of first discharging holes 131, and a second section 22 immediately adjacent to the first section 21 and provided with a plurality of second discharging holes 132. The first discharging holes 131 are equipped with a gas guide 16 respectively, which is configured to guide a portion of the central gas flow, which central gas flow enters the second chamber 7 through the central opening 15, through the first discharging holes 131 into an annular region 8 of the first chamber 6 between the wall body of the central portion 12 and the inner wall of the tube 60. The second discharging holes 132 are configured to guide the reaction gas in the annular region into the second chamber 7. The first discharging holes 131 and the second discharging holes 132 may be offset to each other in the circumferential direction. It is particularly advantageous that the gas guides 16 can be respectively formed of a material cutout punched out from the wall body of the central portion 12, and the first discharging holes 131 are respectively formed by punching out the gas guide 16 from the wall body of the central portion 12. The first discharging holes 131 and the second discharging holes 132 may both be elongated holes. The elongated holes may each extend in an axial plane containing the longitudinal axis of the tube. The gas guides 16 may be tongues extending inside the second chamber 7 and configured to guide a portion of the central gas flow towards the first discharging holes 131.

In a modified solution (not shown), the second discharging holes 132 may also be respectively configured as a circular hole, a square hole or a triangular hole, instead of an elongated hole.

In the case of the second partition element 2 according to the second embodiment, a portion of the hot central gas flow of the reaction gas can be directly discharged into the pressure chamber 30, and the other portion of the hot central gas flow can be returned to the first chamber 6 through the first discharging holes 132 so as to facilitate an ignition and combustion process of the pyrotechnic charge 4 and promote the formation of a turbulent flow of the reaction gas.

Figs. 6A and 6B show a second partition element 2 according to a third embodiment of the present application. The second partition element 2 according to the third embodiment can be used in place of the second partition element according to the first embodiment as shown in Figs. 1 and 2. The modified hybrid gas generator 100 may be a hybrid gas generator according to a third embodiment of the present application, wherein the other components of the modified hybrid gas generator 100 may be the same as or similar to those of the hybrid gas generator according to the first embodiment as shown in Figs. 1 and 2, except for the second partition element 2.

In the second partition element 2 according to the third embodiment, the peripheral portion 11 is also configured in a cylindrical shape, but the central portion 12 is configured in a hemispherical shape. The central portion 12 is connected with the second axial end side of the peripheral portion 11 by an annular bottom 9. The central portion 12 does not extend beyond the peripheral portion 11 towards the first partition element 1 in the axial direction of the tube 60. The top portion of the central portion 12 and the first section including the top portion have no opening, and the second section adjacent to the first section has circular discharging holes 13 in multiple rows.

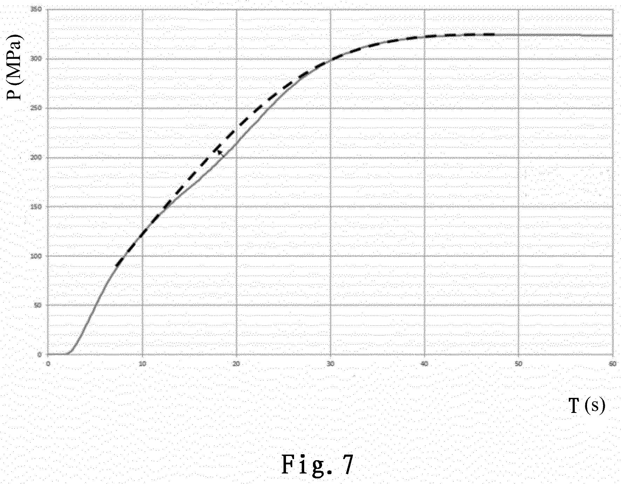

Fig. 7 shows pressure-time curves of a hybrid gas generator according to the prior art and a hybrid gas generator 100 according to the present application, wherein the solid line represents a first pressure-time curve of the hybrid gas generator according to the prior art, and the dotted line represents a portion of a second pressure-time curve of the hybrid gas generator 100 according to the present application, which portion is obviously offset to the corresponding portion of the first pressure-time curve according to the prior art. As can be intuitively seen from Fig. 7, the hybrid gas generator 100 according to the present application can achieve better pressure establishment and can fill the cushion of the safety airbag more quickly.

It should be noted that the terminology used here is only for the purpose of describing specific aspects and is not used to limit the disclosure. As used herein, the singular forms "a" and "the" shall include the plural forms, unless otherwise clearly indicated. It can be understood that the terms "including" and "containing" and other similar terms, when used in the application document, specify the existence of stated operations, elements and/or components, but do not exclude the existence or addition of one or more other operations, elements, components and/or their combinations. The term "and/or" as used herein includes all arbitrary combinations of one or more related listed items. In the description of the drawings, like reference signs always indicate like elements.

The thickness of elements in the drawings may be exaggerated for clarity. In addition, it can be appreciated that if an element is referred to be on, coupled with or connected with another element, it can be directly formed on, coupled with or connected with the other element, or there may be one or more intervening elements between them. On the contrary, if the expressions "directly on... ", "directly coupled with..." and "directly connected with ..." are used here, it means that there are no intervening elements. Other wordings such as "between..." and "directly between... ", "attached" and "directly attached", "adjacent" and "directly adjacent" and so on used to describe the relationship between elements should be interpreted in a similar way.

Terms such as "top", "bottom", "above", "below", "upper" and "lower" are used here to describe the relationship of one element, layer or region with respect to another element, layer or region as shown in the drawings. It can be appreciated that these terms should also include other orientations of the device besides those depicted in the drawings.

It can be understood that although the terms "first", "second" and the like may be used herein to describe different elements, these elements shall not be limited by these terms. These terms are only used to distinguish one element from another. Therefore, a first element may be referred to as a second element without departing from the teaching of the present inventive concept.

It can also be contemplated that all the exemplary embodiments disclosed herein can be arbitrarily combined with each other. Finally, it should be pointed out that the above embodiments are only for understanding the present application, and are not to limit the scope of protection of the present application. For those skilled in the art, modifications can be made on the basis of the embodiments, which do not depart from the protection scope of the present application.

## Claims

**1.** A pyrotechnic charge chamber for a hybrid gas generator, **characterized in that** the pyrotechnic charge chamber comprises a tube (60), and a first partition element (1) and a second partition element (2) disposed oppositely in the tube, wherein the first partition element has a through hole (5) which constitutes an ignition channel for an ignition system (10), wherein a first chamber (6) for containing a pyrotechnic charge (4) is formed between the first and the second partition element in the tube, wherein the pyrotechnic charge is configured to generate a reaction gas in the first chamber when ignited by the ignition system, wherein the second partition element has a peripheral portion (11) abutted against an inner wall of the tube, and a central portion (12) connected with the peripheral portion and extending towards the first partition element in an at least partially-tapered manner in an axial direction of the tube, wherein the central portion has a wall body around a longitudinal axis of the tube, wherein the wall body surrounds and defines a second chamber (7) and has a plurality of discharging holes (13), which discharging holes are configured such that the reaction gas is mixed with a compression gas stored in the tube through the discharging holes.

2. The pyrotechnic charge chamber for a hybrid gas generator as recited in claim 1, **characterized in that** the peripheral portion of the second partition element is formed in a cylindrical shape, and has a first axial end side facing the first partition element and a second axial end side opposite to the first axial end side.

3. The pyrotechnic charge chamber for a hybrid gas generator as recited in claim 2, **characterized in that**, with reference to the longitudinal axis of the tube, the central portion of the second partition element is connected with the peripheral portion at an axial position spaced from the first axial end side of the peripheral portion.

4. The pyrotechnic charge chamber for a hybrid gas generator as recited in claim 3, **characterized in that** the central portion of the second partition element is connected directly with the second axial end side of the peripheral portion, or that the central portion of the second partition element is connected with the second axial end side of the peripheral portion through an annular bottom (9).

5. The pyrotechnic charge chamber for a hybrid gas generator as recited in any one of claims 1 to 4, **characterized in that** the central portion comprises a first section (21) facing the first partition element and having no discharging hole, and a second section (22) adjacent to the first section and provided with the discharging holes.

6. The pyrotechnic charge chamber for a hybrid gas generator as recited in claim 5, **characterized in that** a projection of the through hole of the first partition element falls within a projection of the first section, along the longitudinal axis of the tube in a radial plane perpendicular to the longitudinal axis.

7. The pyrotechnic charge chamber for a hybrid gas generator as recited in claim 6, **characterized in that** a ratio "a" of a diameter of the circular projection of the first section to a diameter of the circular projection of the through hole satisfies the formula: $1 \leq a \leq 1.1$.

8. The pyrotechnic charge chamber for a hybrid gas generator as recited in any one of claims 1 to 4, **characterized in that** the central portion has a central opening (15) at its top portion (14), and the central portion includes a first section (21) facing the first partition element and provided with at least one first discharging hole (131), and a second section (22) adjacent to the first section and provided with at least one second discharging hole (132).

9. The pyrotechnic charge chamber for a hybrid gas generator as recited in claim 8, **characterized in that** the first discharging hole is equipped with a gas guide (16) configured to guide a portion of a central gas flow, which central gas flow enters the second chamber through the central opening, through the first discharging hole into an annular region (8) of the first chamber between the wall body of the central portion and the inner wall of the tube, and the second discharging hole is configured to guide the reaction gas in the annular region into the second chamber.

10. The pyrotechnic charge chamber for a hybrid gas generator as recited in claim 8, **characterized in that** the first section has a plurality of first discharging holes distributed in a circumferential direction, and/or the second section has a plurality of second discharging holes distributed in a circumferential direction.

11. The pyrotechnic charge chamber for a hybrid gas generator as recited in claim 8, **characterized in that** the first section has a plurality of first discharging holes distributed in a circumferential direction, and the second section has a plurality of second discharging holes distributed in the circumferential direction, wherein the first discharging holes and the second discharging holes are offset to each other in the circumferential direction.

12. The pyrotechnic charge chamber for a hybrid gas generator as recited in claim 9, **characterized in that** the gas guide is formed of a material cutout punched out from the wall body of the central portion, and the first discharging hole is formed by punching out the gas guide from the wall body of the central portion.

13. The pyrotechnic charge chamber for a hybrid gas generator as recited in claim 12, **characterized in that** the first discharging hole is an elongated hole, and the gas guide is a tongue extending in the second chamber and configured to guide the portion of the central gas flow towards the first discharging hole.

14. The pyrotechnic charge chamber for a hybrid gas generator as recited in any one of claims 1 to 4, **characterized in that** the plurality of discharging holes comprise a circular hole and/or an elongated hole.

15. The pyrotechnic charge chamber for a hybrid gas generator as recited in claim 14, **characterized in that** the elongated hole extends in an axial plane containing the longitudinal axis of the tube.

16. The pyrotechnic charge chamber for a hybrid gas generator as recited in any one of claims 1 to 4, **characterized in that** the central portion is configured in a conical or hemispherical shape.

17. The pyrotechnic charge chamber for a hybrid gas generator as recited in claim 16, **characterized in that** the central portion in a conical shape extends beyond the peripheral portion towards the first partition element in the axial direction of the tube, or that the central portion in a hemispherical shape does not extend beyond the peripheral portion towards the first partition element in the axial direction of the tube.

18. The pyrotechnic charge chamber for a hybrid gas generator as recited in any one of claims 1 to 4, **characterized in that** the second partition element is configured as a revolving body.

19. The pyrotechnic charge chamber for a hybrid gas generator as recited in any one of claims 1 to 4, **characterized in that** the second partition element is press-fitted into the tube.

20. The pyrotechnic charge chamber for a hybrid gas generator as recited in claim 19, **characterized in that** a pretensioning force for press-fitting the second partition element into the tube is configured such that the second partition element slides in the tube in a predetermined limited manner when the hybrid gas generator is activated.

21. The pyrotechnic charge chamber for a hybrid gas generator as recited in any one of claims 1 to 4, **characterized in that** the peripheral portion has a length L along the longitudinal axis of the tube, which length L satisfies the following formula:

$$0.25 \times \pi \times Di \times L \times Pmax > \Delta P \times \pi \times (Di^2/4 - Qh \times Dh^2/4),$$

where Di is an inner diameter of the tube, Pmax is a maximum internal pressure existing in the tube when the hybrid gas generator is activated, $\Delta P$ is a pressure difference between the maximum internal pressure and a pressure of the compression gas, Dh is a diameter of the discharging holes, and Qh is the number of the discharging holes in the second section.

22. The pyrotechnic charge chamber for a hybrid gas generator as recited in claim 21, **characterized in that** the length L further satisfies the following formula:

$$0.25 \times \pi \times Di \times L \times Pmax < 1.1 \times \Delta P \times \pi \times (Di^2/4 - Qh \times Dh^2/4).$$

23. The pyrotechnic charge chamber for a hybrid gas generator as recited in any one of claims 1 to 4, **characterized in that** the first partition element is configured in a cylindrical shape, wherein a peripheral surface of the first partition element is abutted against the inner wall of the tube, wherein the through hole is configured to receive a closed protrusion (3) of the ignition system, which protrusion is openable when the ignition system is activated, wherein a depth, with which the protrusion extends into the through hole, is less than or equal to an axial thickness of the first partition element.

24. The pyrotechnic charge chamber for a hybrid gas generator as recited in any one of claims 1 to 4, **characterized in that** the first partition element is a plastic part, and/or the second partition element is a sheet metal formed part.

25. The pyrotechnic charge chamber for a hybrid gas generator as recited in any one of claims 1 to 4, **characterized in that** the first partition element is made of polyurethane, and the second partition element is made of spring steel.

26. A hybrid gas generator comprising a tube (60) defining a pressure chamber (30) for containing a compression gas, wherein an ignition system (10) and a pyrotechnic charge chamber (20) are mounted at a first axial end of the tube, wherein with reference to a longitudinal axis of the tube, the pyrotechnic charge chamber is adjacent to the ignition system at one side and adjacent to the pressure chamber for containing the compression gas at the other side, **characterized in that** the pyrotechnic charge chamber is the one as recited in any one of claims 1 to 25.

27. The hybrid gas generator as recited in claim 26, **characterized in that** the tube is provided, at a second axial end opposite to the first axial end, with a throat sealed by a rupture membrane (50), wherein a ratio "b" of a total area of the plurality of discharging holes to an area of the throat satisfies the formula: b > 1.1.

28. The hybrid gas generator as recited in claim 27, **characterized in that** the ratio "b" satisfies the formula: 1.2<b<1.4.

29. A safety airbag comprising a cushion, and a gas generator in fluid connection with the cushion, **characterized in that** the gas generator is the hybrid gas generator as recited in any one of claims 26 to 28.

Fig. 1

Fig. 2

Fig. 3A

Fig. 3B

Fig. 4A

Fig. 4B

Fig. 5A

Fig. 5B

Fig. 6A

Fig. 6B

Fig. 7

## INTERNATIONAL SEARCH REPORT

| International application No. |
|---|
| **PCT/CN2023/124519** |

**A. CLASSIFICATION OF SUBJECT MATTER**

B60R21/272(2006.01)i

According to International Patent Classification (IPC) or to both national classification and IPC

**B. FIELDS SEARCHED**

Minimum documentation searched (classification system followed by classification symbols)

IPC:B60R

Documentation searched other than minimum documentation to the extent that such documents are included in the fields searched

Electronic data base consulted during the international search (name of data base and, where practicable, search terms used)

CNTXT, ENTXTC, WPABSC, CNKI: 气体发生器, 充气机, 火药, 点火, 引爆, 分隔, 挡板, 气孔; DWPI, VEN, ENTXT, WPABS, USTXT, WOTXT: gas generator, inflator, gunpowder, ignition, separate, barrier, baffle, hole.

**C. DOCUMENTS CONSIDERED TO BE RELEVANT**

| Category* | Citation of document, with indication, where appropriate, of the relevant passages | Relevant to claim No. |
|---|---|---|
| PX | CN 115891898 A (YANFENG AUTOMOBILE INTELLIGENT SAFETY SYSTEM CO., LTD.) 04 April 2023 (2023-04-04)<br>entire document | 1-29 |
| X | CN 111565980 A (AUTOLIV ASP INC.) 21 August 2020 (2020-08-21)<br>description, paragraphs 42-87, and figures 1-12 | 1-29 |
| A | CN 115042738 A (CHEN JIANLIN) 13 September 2022 (2022-09-13)<br>entire document | 1-29 |
| A | DE 102016122192 A1 (TRW AIRBAG SYSTEMS GMBH) 24 May 2018 (2018-05-24)<br>entire document | 1-29 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 December 2023** | **08 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/124519**

| Patent document cited in search report | | | Publication date (day/month/year) | Patent family member(s) | | | Publication date (day/month/year) |
|---|---|---|---|---|---|---|---|
| CN | 115891898 | A | 04 April 2023 | None | | | |
| CN | 111565980 | A | 21 August 2020 | EP | 3707032 | A1 | 16 September 2020 |
| | | | | EP | 3707032 | B1 | 09 August 2023 |
| | | | | WO | 2019094185 | A1 | 16 May 2019 |
| | | | | US | 2019135223 | A1 | 09 May 2019 |
| | | | | US | 10493948 | B2 | 03 December 2019 |
| | | | | WO | 2019094185 | A9 | 16 May 2019 |
| | | | | CN | 111565980 | B | 11 October 2022 |
| CN | 115042738 | A | 13 September 2022 | CN | 217864029 | U | 22 November 2022 |
| DE | 102016122192 | A1 | 24 May 2018 | None | | | |

Form PCT/ISA/210 (patent family annex) (July 2022)